# EUROPÄISCHE PATENTSCHRIFT

(11) **EP 0 601 314 B1**
(45) Veröffentlichungstag und Bekanntmachung des Hinweises auf die Patenterteilung: **03.09.1997**
(21) Anmeldenummer: 93116921.3
(22) Anmeldetag: 20.10.1993
(51) Int. Cl.: B01D 53/72

(54) **Abgasreinigungssystem zur Verminderung der Kohlenwasserstoff-Emissionen während des Kaltstarts von Verbrennungskraftmaschinen**
Exhaust gas cleaning device for reducing hydrocarbon emissions during cold start of combustion engines
Dispositif de purification de gaz d'échappement pour réduire les émissions d'hydrocarbures pendant la mise en marche froide de moteurs à combustion

(30) Priorität: 27.11.1992 DE 4239875
(43) Veröffentlichungstag der Anmeldung: 15.06.1994
(73) Patentinhaber: Degussa Aktiengesellschaft, 60311 Frankfurt (DE)
(72) Erfinder: Lindner, Dieter, Dr., D-63457 Hanau (DE); Lox, Egbert, Dr., D-63457 Hanau (DE); Engler, Bernd, Dr., D-63457 Hanau (DE); Ostgathe, Klaus, D-65795 Hattersheim (DE)

(56) Entgegenhaltungen:
- EP-A- 0 424 966
- EP-A- 0 485 179
- DE-A- 3 928 760
- DE-A- 4 033 827
- DE-A- 4 236 271

## Beschreibung

Die Erfindung betrifft ein Abgasreinigungssystem zur Verminderung der Kohlenwasserstoff-Emissionen während des Kaltstarts von Verbrennungskraftmaschinen. Das Abgasreinigungssystem enthält einen Kohlenwasserstoff-Adsorber und ein nachgeschaltetes Katalysatorsystem, welches aus einem einzelnen Dreiwegkatalysator oder aus einer Kombination von Oxidations-, Reduktions- und/oder Dreiwegkatalysatoren in einem oder mehreren Betten bestehen kann.

Die zukünftigen Grenzwerte für die Schadstoffemissionen von Kraftfahrzeugen sind in den Vorschriften TLEV/1994 und LEV/1997 (LEV = Low Emission Vehicle) festgeschrieben. Sie stellen insbesondere für Kohlenwasserstoffe eine wesentliche Verschärfung der Grenzwerte dar. Da heutige Abgaskatalysatoren im betriebswarmen Zustand einen hohen Stand der Schadstoffkonversion erreicht haben, ist die Einhaltung der zukünftigen Grenzwerte nur durch eine Verbesserung der Schadstoffkonversion während der Kaltstartphase möglich. Denn während der Kaltstartphase der gesetzlich festgelegten Testzyklen (z.B. US FTP 75) wird ein Großteil der insgesamt freigesetzten Kohlenwasserstoffe emittiert. Die Katalysatoren haben in dieser Phase noch nicht die für die Umsetzung notwendige Betriebstemperatur von 300 bis 400° C erreicht.

Bei den während der Kaltstartphase emittierten Kohlenwasserstoffen handelt es sich hauptsächlich um C₁- bis C₁₀-Verbindungen wie Paraffine, Iso-Paraffine, Olefine und Aromate.

Zur Verringerung der Schadstoffemissionen während der Kaltstartphase wird zum Beispiel in der US-Patentschrift 5,078,979 ein Abgasreinigungssystem bestehend aus einem Kohlenwasserstoffadsorber und einem nachgeschalteten Katalysator vorgeschlagen. Der Kohlenwasserstoffadsorber hat dabei die Aufgabe, während der Kaltstartphase bei noch relativ niedrigen Temperaturen die im Abgas enthaltenen Kohlenwasserstoffe zu adsorbieren. Erst bei stärkerer Erwärmung des Adsorbers werden die Kohlenwasserstoffe wieder desorbiert und gelangen mit dem jetzt heißeren Abgas zu dem nun schon fast auf Betriebstemperatur befindlichen Katalysator und werden hier in unschädliches Wasser und Kohlendioxid konvertiert. Eine wesentliche Forderung an den Adsorber ist dabei die Fähigkeit, Kohlenwasserstoffe bevorzugt vor dem im Abgas ebenfalls reichlich vorhandenen Wasserdampf zu adsorbieren.

Nachteilig bei dieser beschriebenen Lösung ist die schon bei relativ niedrigen Temperaturen einsetzende Desorption der Kohlenwasserstoffe, so daß eine optimale Konversion am nachfolgenden Katalysator noch nicht stattfinden kann. Gewöhnlich klafft zwischen der Anspringtemperatur T_{A} des Katalysators von 300 bis 400° C und der Desorptionstemperatur T_{D} des unmittelbar vorgeschalteten Adsorbers von etwa 150 bis 200° C eine Temperaturlücke von mehr als 100° C, d. h. es ist T_{A} - T_{D} > 100° C. Außerdem besteht die Gefahr einer thermischen Zerstörung des Adsorbers, da er motornah in das Abgasreinigungssystem eingebaut werden muß und deshalb bei Dauerbetrieb Temperaturbelastungen bis zu 1000° C ausgesetzt ist.

Zur Behebung dieser Mängel gibt es eine große Zahl von Vorschlägen in der Patentliteratur, so zum Beispiel in der deutschen Offenlegungsschrift DE-A-40 08 789, in der europäischen Patentanmeldung EP-A-0 460 542, sowie in der US-Patentschrift -A-5,051,244. Diese Dokumente gehen ebenfalls von der Kombination eines Kohlenwasserstoff-Adsorbers und eines Katalysators aus, schlagen aber zur Behebung der beschriebenen Nachteile aufwendige Schaltungen für das Abgas vor.

So schlägt die US-A-5,051,244 vor, einen Molekularsieb-Adsorber vor den eigentlichen Katalysator zu schalten, der im kalten Zustand die Schadstoffe im Abgas, insbesondere Kohlenwasserstoffe, adsorbiert und sie mit zunehmender Erwärmung des Abgasreinigungssystems wieder abgibt. Zum Schutz des Adsorbers vor Zerstörung durch Überhitzung bei Dauerbetrieb des Motors ist eine zuschaltbare Kurzschlußleitung vom Motor direkt zum Katalysator vorgesehen.

Während der ersten 200 bis 300 Sekunden nach dem Start wird das Abgas voll über den Adsorber und den Katalysator geleitet. In dieser Betriebsphase werden die Kohlenwasserstoffe vom Adsorber aufgenommen. Adsorber und Katalysator erwärmen sich zunehmend durch das heiße Abgas. Der Adsorber wird kurzgeschlossen, wenn infolge der Temperaturerhöhung die Desorption die Adsorption zu übertreffen beginnt. Das Abgas strömt nun direkt über den Katalysator. Bei Erreichen der Betriebstemperatur wird ein Teil des heißen Abgases bis zur völligen Desorption der Schadstoffe über den Adsorber geleitet, die nun vom Katalysator mit gutem Wirkungsgrad umgesetzt werden können. Nach erfolgter Desorption wird der Adsorber wieder kurzgeschlossen, um ihn vor Zerstörung durch thermische Überlastung zu schützen.

Von der US-A-5,051,244 und US-A-5,078,979 werden als Adsorber natürliche oder künstliche Zeolithe mit einem Si/Al-Atomverhältnis von wenigstens 2,4 vorgeschlagen. Als geeignete Zeolithe werden Silicalit, Faujasit, Clinoptilolit, Mordenit, Chabazit, ultrastabiler Y-Zeolith, Y-Zeolith und ZMS-5 sowie eine Mischung davon genannt. Der Zeolithadsorber kann außerdem feinverteilte katalytisch aktive Metalle wie Platin, Palladium, Rhodium, Ruthenium und Mischungen davon enthalten.

Die DE-A-3928760 beschreibt eine Abgas-Reinigungsvorrichtung aus einem Adsorber und einem 3-Wege-Katalysator. Als Adsorbermaterial für die Schadstoffkomponenten aus dem Abgas werden ein Y-Zeolith oder ein Mordenit verwendet. Der Adsorber ist auf der Anströmseite des katalytischen Konverters angeordnet und adsorbiert die Schadstoffkomponenten aus dem Abgas bei Temperaturen unterhalb einer spezifischen Temperatur. Überschreitet die Abgastemperatur die spezifische Temperatur, werden die Schadstoffkomponenten desorbiert und in den katalytischen Konverter eingeführt. Ferner sind auf der Anströmseite des Adsorbers parallel zueinander ein Aktivkohlefänger und eine Bypass-Leitung vorgesehen, so daß die Strömungswege des Abgases wahlweise umgeschaltet werden können.

Die EP-A-0485179 beschreibt einen beheizbaren katalytischen Konverter, welcher auf einem wabenförmigen Träger eine Beschichtung aus einem Adsorbermaterial oder aus einem Adsorbermaterial und einer darauf aufgebrachten katalytischen Komponente enthält. Als Adsorbermaterial können Y-Zeolithe, Mordenit, ZSM5, ZSM8 und Silicalit verwendet werden. Bevorzugt werden Zeolithe mit einem Si/Al-Verhältnis von mehr als 40 eingesetzt. Solche Zeolithe haben eine bessere Temperaturbeständigkeit und sind hydrophober als Zeolithe mit einem kleineren Si/Al-Verhälnis.

Diese aus dem Stand der Technik bekannten Lösungen sind entweder technisch sehr aufwendig, teuer und störanfällig oder bleiben wie im Fall der US-A-5,078,979 eine Lösung für die Überbrückung der Temperaturlücke zwischen der Desorptionstemperatur des Adsorbers und der Anspringtemperatur des nachgeschalteten Katalysators schuldig. Es ist Aufgabe der vorliegenden Erfindung, ein Abgasreinigungssystem anzugeben mit dem diese aus dem Stand der Technik bekannten Nachteile bei sehr guter Kohlenwasserstoffunterdrückung während der Kaltstartphase behoben werden.

Diese Aufgabe wird gelöst durch ein Abgasreinigungssystem zur Verminderung der Kohlenwasserstoff-Emission während des Kaltstarts von Verbrennungskraftmaschinen enthaltend eine Adsorbermischung aus einem dealuminierten Y-Zeolithen mit einem Si/Al-Verhältnis von über 40 und einem Zeolithen ZSM5 mit einem Si/Al-Verhältnis von über 20, wobei die Adsorbermischung ein Massenverhältnis der beiden Zeolithe von 1 : 10 bis 10 : 1 aufweist, sowie einen unmittelbar nachgeschalteten Oxidationskatalysator mit Platin und/oder Palladium und/oder Rhodium, wobei der Oxidationskatalysator wenigstens 3,5 g Platin und/oder Palladium pro Liter Katalysatorvolumen enthält.

Alternativ hierzu kann der Oxidationskatalysator entfallen und der nachgeschaltete Dreiwegekatalysator, welcher Platin und/oder Palladium und Rhodium enthält mit einer Beladung von wenigstens 3,5 g Platin und/oder Palladium pro Liter Katalysatorvolumen versehen werden.

Eine weitere Lösungsmöglichkeit besteht darin, die Adsorbermischung in Form einer zweiten Beschichtung auf einem wabenförmigen Träger auf einer ersten Beschichtung aus einem Oxidationskatalysator, welcher mehr als 3,5 g Platin und/oder Palladium pro Liter Katalysatorvolumen enthält, aufzubringen.

Diese Abgasreinigungssysteme gewährleisten, daß die Differenz zwischen der Anspringtemperatur T_{A} des Oxidations- oder Dreiwegekatalysators für die Konversion der Kohlenwasserstoffe und der Desorptionstemperatur T_{D} des unmittelbar vorgeschalteten Adsorbers kleiner als 50 °C ist, d.h. T_{A} - T_{D} < 50 °C.

Unter der Anspringtemperatur T_{A} des Katalysators wird hierbei diejenige Abgastemperatur vor dem Katalysator verstanden, bei der der Katalysator gerade 50 % der Kohlenwasserstoffe konvertiert.

Die Desorptionstemperatur T_{D} des Adsorbers ist eine Kenngröße, die nur im dynamischen Betrieb am Motor bestimmt werden kann. Hierzu wird zunächst während der ersten 200 bis 300 Sekunden nach dem Kaltstart die Rohemission des Motors an Kohlenwasserstoffen ohne Verwendung eines Adsorbers in Abhängigkeit von der Zeit aufgenommen. Diese Rohemission zeigt typischerweise während der ersten 60 bis 100 Sekunden ein hohes und breites Maximum. Die Emission an Kohlenwasserstoffen sinkt mit zunehmender Erwärmung des Motors auf das normale Niveau bei betriebswarmem Motor ab. In einem zweiten Testlauf wird dann die Emission an Kohlenwasserstoffen nach dem zugeschalteten Adsorber sowie die Temperatur vor dem Adsorber in Abhängigkeit von der Zeit gemessen.

Durch den Adsorber wird die Emission an Kohlenwasserstoffen durch Adsorption zunächst stark unterdrückt, steigt dann jedoch mit zunehmender Erwärmung des Abgases infolge steigender Desorption vom Adsorber an und durchschreitet mit einer Zeitverzögerung gegenüber der Rohemission ebenfalls ein Emissionsmaximum, bevor sie schließlich auf den Wert der Rohemission bei betriebswarmem Motor abfällt. Infolge des zeitlichen Versatzes der Emissionsmaxima der Rohemission und der Emission mit Adsorber kommt es zu einem bestimmten Zeitpunkt innerhalb von etwa 60 bis 100 Sekunden nach dem Kaltstart zu einem Schnittpunkt der beiden Emissionskurven.

Die zu diesem Zeltpunkt vor dem Adsorber vorliegende Abgastemperatur wird als Desorptionstemperatur T_{D} des Adsorbers bezeichnet. Sie hängt von der Auslegung des jeweiligen Abgassystems sowie von dem Adsorbermaterial selber ab und liegt typischerweise zwischen 150 und 200° C.

Der Zeolith Y gehört zu den weitporigen Zeolithen mit einem Porendurchmesser von 0,74 nm, einem Porenvolumen von 0,3 ml/g und einer spezifischen Oberfläche von mehr als 700 m²/g. Der Zeolith ZSM5 ist ein mittelporiger Zeolith mit einer Porenweite von ca. 0,55 nm. Der Y-Zeolith weist aufgrund seiner großen Porenöffnung eine hohe anfängliche Adsorptionskapazität für die im Abgas enthaltenen Aromate auf. Die Adsorptionskapazität sinkt jedoch sehr schnell mit steigender Temperatur. Der Zeolith ZSM5 hat dagegen eine geringere anfängliche Adsorptionskapazität für Aromate, zeigt jedoch mit steigender Temperatur einen geringeren Abfall dieser Kapazität. Außerdem hat dieser Zeolith ein gutes Adsorptionsvermögen für andere noch im Abgas enthaltenen Kohlenwasserstoffe. Die erfindungsgemäße Kombination beider Zeolithe führt zu einem optimalen Adsorptionsverhalten im interessierenden Temperaturbereich.

Das hohe Si/Al-Verhältnis der erfindungsgemäß einzusetzenden Zeolithe gewährleistet einerseits eine hohe Selektivität der Adsorption von Kohlenwasserstoffen gegenüber Wasser und andererseits eine gute Temperaturstabilität bis über 1000° C sowie eine gute Säurebeständigkeit. Die Temperaturstabilltät ist für das erfindungsgemäße Abgasreinigungssystem notwendig, da der Adsorber motornah angeordnet ist und damit hohen Temperaturen im Betrieb ausgesetzt ist.

Das dem Kohlenwasserstoff-Adsorber nachgeschaltete Katalysatorsystem kann aus einem Dreiwegkatalysator oder aus einer Kombination von Oxidations-, Reduktions-und/oder Dreiwegkatalysatoren in einem oder mehreren Betten bestehen.

Solche Katalysatoren und ihre Herstellung sind dem Fachmann bekannt. Sie bestehen gewöhnlich aus einem Tragkörper in Form eines offenzelligen Wabenkörpers aus Keramik oder Metall. Zur Aufnahme von katalytisch aktiven Edelmetallen werden diese Wabenkörper mit einer aktivitätssteigernden, hochoberflächigen oxidischen Dispersionsbeschichtung aus zum Beispiel γ-Aluminiumoxid in einer Menge von 100 bis 400 g, gewöhnlich 160 g pro Liter Wabenkörpervolumen versehen. Die katalytisch aktiven Edelmetalle können auf dieser Oxidbeschichtung durch Imprägnieren aufgebracht werden. Im Falle von Oxidationskatalysatoren werden bevorzugt Platin und/oder Palladium eingesetzt. Dreiwegkatalysatoren enthalten als katalytisch aktive Edelmetalle Platin und/oder Palladium und/oder Rhodium.

Bei einem erfindungsgemäßen Abgasreinigungssystem aus Adsorber, Oxidationskatalysator und Dreiwegkatalysator ist die Beladung des Oxidationskatalysators mit Platin und/oder Palladlum gegenüber der Beladung herkömmlicher Oxidationskatalysatoren von 0,01 bis 1,8 g pro Liter Katalysatorvolumen um mindestens das Doppelte auf wenigstens 3,5 g Platin und/oder Palladlum pro Liter Katalysatorvolumen erhöht. Bevorzugt sollte die Beladung 7 g pro Liter oder mehr betragen. Besonders effektiv sind Beladungen mit mehr als 10 bzw. mehr als 20 g Edelmetall pro Liter Katalysatorvolumen. Der Oxidationskatalysator ist dem Adsorber unmittelbar nachgeordnet.

Diese hohe Beladung mit den katalytisch aktiven Elementen führt zu einer Absenkung der Anspringtemperatur gegenüber normal beladenen Katalysatoren um ca. 50 bis 100° C.

Besteht das dem Adsorber nachgeschaltete Katalysatorsystem nur aus einem Dreiwegkatalysator mit den Platingruppen-Metallen Platin und/oder Palladium und/oder Rhodium, so kann zur Absenkung der Anspringtemperatur für die Konversion von Kohlenwasserstoffen auch bei diesem Katalysator die Beladung mit Platin und/oder Palladium gegenüber der Beladung herkömmlicher Katalysatoren von 0,01 bis 1,8 g pro Liter Katalysatorvolumen um mindestens das Doppelte auf wenigstens 3,5 g Platin und/oder Palladium pro Liter Katalysatorvolumen erhöht werden.

Der Adsorber kann als Schüttgut in Form von Tabletten, Strangpreßlingen oder Agglomeraten eingesetzt werden. Bevorzugt ist jedoch die Verwendung des Adsorbers in Form einer Dispersionsbeschichtung auf einem monolithischen Wabenkörper in einer Menge von 100 bis 400 g pro Liter Wabenkörper. Die tatsächlich anzuwendende Beschichtungsmenge richtet sich nach den Kohlenwasserstoffemissionen der zu entgiftenden Verbrennungskraftmaschine. Die optimale Menge kann von jedem Fachmann mit wenigen Versuchen bestimmt werden.

Die Dispersionsbeschichtung wird zum Beispiel durch Tauchen des Wabenkörpers in eine wäßrige Dispersion der Adsorbermischung gefolgt von Ausblasen überschüssiger Dispersion, Trocknen und eventuell Kalzinieren zum Fixieren der Beschichtung auf dem Wabenkörper aufgebracht. Zur Aufbringung der gewünschten Adsorbermenge kann diese Beschichtung gegebenenfalls mehrfach wiederholt werden.

Die Erfindung wird nun anhand einiger Beispiele näher erläutert. Es zeigen
- Figur 1:: Kohlenwasserstoffemission einer Verbrennungskraftmaschine mit Abgasreinigungssystem nach Vergleichsbeispiel 3a während der Kaltstartphase des US FTP-75 Tests
- Figur 1a:: schematisch den Aufbau des Abgasreinigungssystems
- Figur 2:: Kohlenwasserstoffemission einer Verbrennungskraftmaschine mit Abgasreinigungssystem nach Vergleichsbeispiel 3b während der Kaltstartphase des US FTP-75 Tests
- Figur 2a:: schematisch den Aufbau des Abgasreinigungssystems
- Figur 3:: Kohlenwasserstoffemission einer Verbrennungskraftmaschine mit Abgasreinigungssystem nach Beispiel 3 während der Kaltstartphase des US FTP-75 Tests
- Figur 3a:: schematisch den Aufbau des Abgasreinigungssystems

### Beispiel 1 Adsorptionseigenschaften von Zeolith Y und ZSM5

Es wurde die Adsorptionskapazität eines DAY-Zeolithen (Dealuminierter Y-Zeolith) mit einem Si/Al-Verhältnis von > 100 und von zwei Zeolithen ZSM5 mit den Si/Al-Verhältnissen von > 500 und von 58 für Toluol bei 20 und 80° C bestimmt. Die Ergebnisse sind in der Tabelle 1 niedergelegt.

**Tabelle 1**

| Adsorptionskapazität eines DAY-Zeolithen und von ZSM5 | | | |
|---|---|---|---|
| T[° C] | Zeolith | Si/Al | M_{Toluol} [g/100g] |
| 20 | DAY | >100 | 15,1 |
| 20 | ZSM5 | >500 | 6,2 |
| 20 | ZSM5 | 58 | 7,1 |
| 80 | DAY | >100 | 0,8 |
| 80 | ZSM5 | >500 | 1,4 |
| 80 | ZSM5 | 58 | 2,2 |

Die Daten von Tabelle 1 gelten für eine Toluolkonzentration von 1 g/m³ Luft. M_{Toluol} ist die Menge des adsorbierten Toluols, welche bei der jeweils angegebenen Temperatur mit der umgebenden Atmosphäre im Gleichgewicht steht in Gramm Toluol pro 100 g Zeolith. Tabelle 1 zeigt sehr deutlich das unterschiedliche Adsorptionsverhalten des DAY-Zeolithen und von Zeolith ZSM5. Während der DAY-Zeolith bei niedriger Temperatur ein hervorragendes Adsorptionsvermögen für Toluol zeigt, das jedoch mit steigender Temperatur sehr schnell absinkt, ist die entsprechende Kurve für den ZSM5-Zeolithen wesentliche flacher. Schon bei 80° C ist der Zeolith ZSM5 dem DAY-Zeolithen Überlegen. Eine Mischung beider Zeolithe gibt ein ausgeglicheneres Adsorptionsverhalten über einen größeren Temperaturbereich.

### Beispiel 2

Es wurden die Anspringtemperaturen T_{A} für die Konversion von Kohlenwasserstoffen von Palladium-Oxidationskatalysatoren mit unterschiedlicher Palladium-Beladung und eines Standard Platin/Rhodium-Dreiwegkatalysators im frischen und gealterten Zustand bei Raumgeschwindigkeiten von 75 000 h⁻¹ bzw. 60 000 h⁻¹ und einer Luftzahl Lambda von 1,15 gemessen.

Die Katalysatoren bestanden aus der jeweiligen oxidischen Dispersionsbeschichtung von 160 g γ-Aluminiumoxid pro Liter auf keramischen Wabenkörpern aus Cordierit und den darauf abgeschiedenen katalytisch aktiven Edelmetallen. Die Wabenkörper hatten eine Zelldichte von 62 Zellen pro cm². Die Anspringtemperaturen sind in Tabelle 2 aufgelistet.

**Tabelle 2**

| Anspringtemperaturen verschiedener Katalysatoren; Lambda = 1,15 | | | |
|---|---|---|---|
| Beladung [ g Pd/l] | T_{A} [°C] | | Raumgeschwindigkeit [ h⁻¹ ] |
| | frisch | gealtert | |
| 3,53 | 226 | 237 | 75 000 |
| 5,30 | 227 | 232 | 75 000 |
| 7,06 | 220 | 235 | 75 000 |
| 10,59 | 219 | 220 | 75 000 |
| 20 | 191 | 209 | 60 000 |
| 40 | 189 | 204 | 60 000 |

| 5 Pt/1 Rh Standard-Dreiwegkatalysator | | | |
|---|---|---|---|
| 1,41 g/l | 251 | 286 | 60 000 |

Zur Messung der Anspringtemperaturen der gealterten Katalysatoren wurden sie für die Dauer von 100 Stunden am Motor bei Abgastemperaturen vor Katalysator von 850° C betrieben. Aufgrund der Reaktionswärme führt dies zu Temperaturen im Katalysatorbett von 1000° C.

Die Palladium-Oxidationskatalysatoren von Tabelle 2 haben eine wesentlich geringere Anspringtemperatur für die Konversion der Kohlenwasserstoffe als der Standard-Dreiwegkatalysator. Bemerkenswert ist auch die hohe Alterungsstabilität ihrer Anspringtemperatur, die auf die hohe Palladium-Beladung zurückgeführt werden kann. Tabelle 2 zeigt außerdem, daß die Anspringtemperatur des Palladium-Oxidationskatalysators mit zunehmender Palladium-Beladung stark abnimmt.

Die Anspringtemperaturen dieser hochbeladenen Palladium-Oxidationskatalysatoren liegen mit Werten von unter 237° C dicht oberhalb der typischen Desorptionstemperaturen der Adsorber und zeigen bei sehr hohen Beladungen Anspringtemperaturen bei etwa 200° C. Sie sind in der Lage, die vom Adsorber bei etwa 200° C desorbierenden Kohlenwasserstoffe ohne die aus dem Stand der Technik bekannten aufwendigen Abgasschaltungen direkt zu konvertieren. Der Standard-Dreiwegkatalysator ist dazu wegen seiner hohen Anspringtemperatur besonders im gealterten Zustand nicht in der Lage.

Im folgenden wurden die Kohlenwasserstoffemissionen eines Kraftfahrzeugs mit Otto-Motor (Mercedes 300 E; Hubraum: 3 l, Leistung: 162 KW) während der Kalstartphase für unterschiedliche Abgasreinigungssysteme entsprechend Beispielen 3 und den Vergleichsbeispielen 3a und 3b gemessen. Die Ergebnisse der Restemissionsmessungen gemäß des US FTP-75 Tests sind in Tabelle 3 zusammengefaßt.

Die Abgasreinigungssysteme bestanden dabei jeweils aus 3 hintereinandergeschalteten Wabenkörpern aus Cordierit mit 62 Zellen pro cm². Der motorseitige Wabenkörper hatte eine Länge von 154 mm und ein Volumen von 1,8 l. Die beiden hinteren Wabenkörper hatten jeweils eine Länge von 102 mm und ein Volumen von 1,2 l.

Diese Wabenkörper wurden zum Vergleich eines erfindungsgemäßen Abgasreinigungssystems mit herkömmlichen Systemen wie folgt beschichtet:

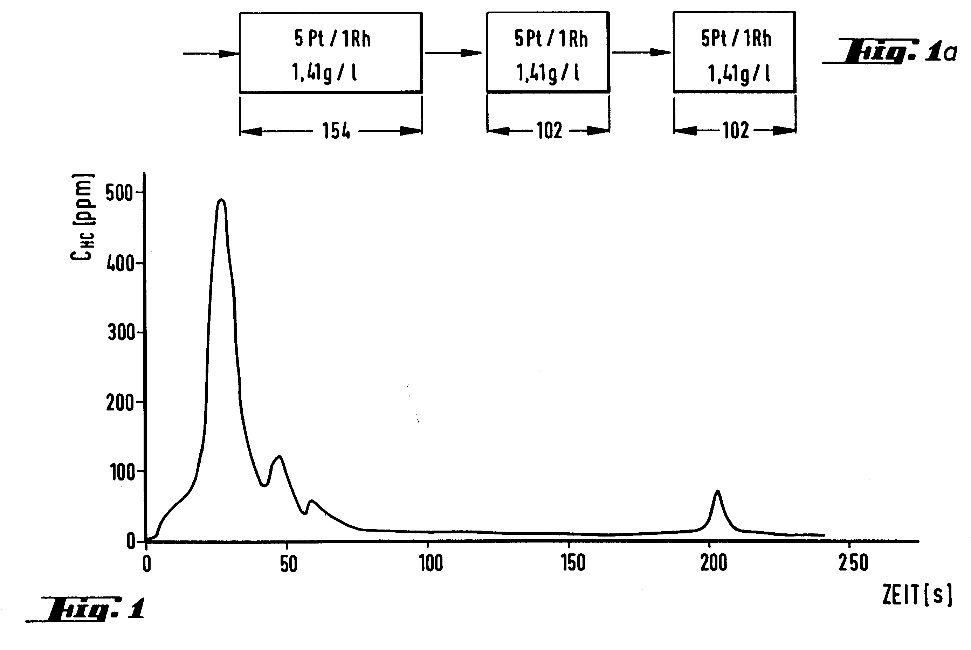

### Vergleichsbeispiel 3 a (Fig. 1, 1a)

- 1.-3. Wabenkörper:: Beschichtung mit einem Standard-Dreiwegkatalysator nach Beispiel 2; gealtert

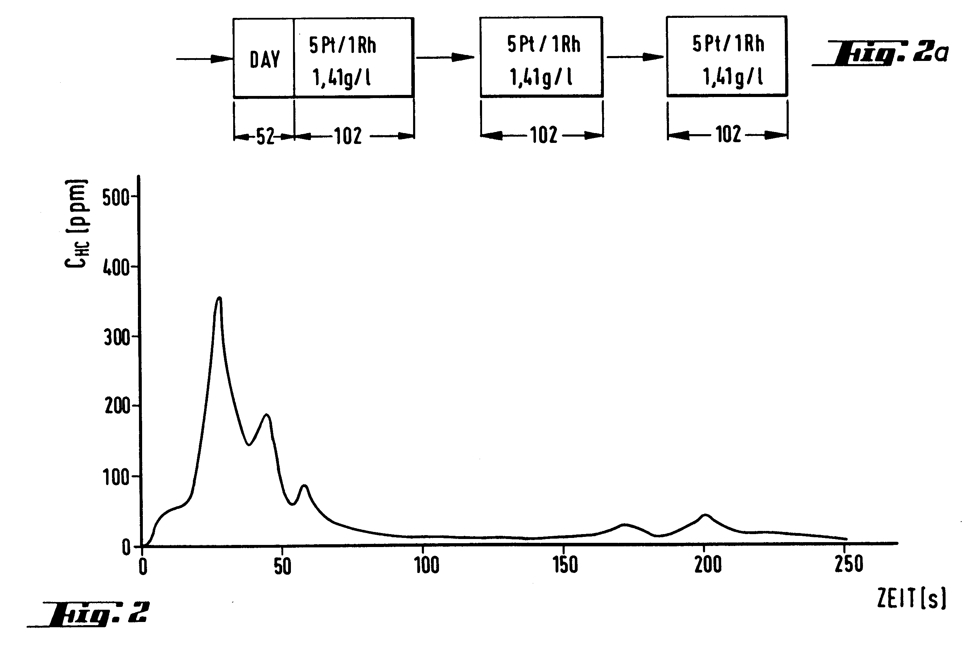

### Vergleichsbeispiel 3 b (Fig. 2, 2a)

- 1. Wabenkörper:: Beschichtung mit 100 g/l DAY-Zeolith (Si/Al > 100)
- 2.-3. Wabenkörper:: Beschichtung mit einem Standard-Dreiwegkatalysyator nach Beispiel 2; gealtert

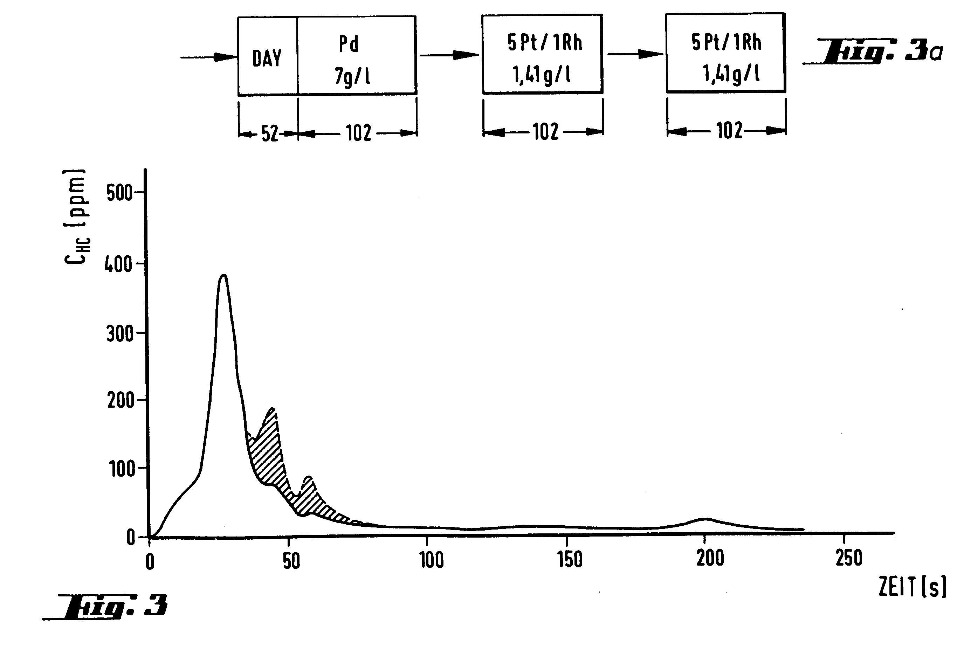

### Beispiel 3 (Fig. 3, 3a)

- 1. Wabenkörper:: Der erste Wabenkörper wurde durch zwei Teilkörper ersetzt. Der motorseitige Teilkörper von 52 mm Länge erhielt eine Beschichtung aus 100 g/l DAY-Zeolith (Si/Al > 100). Der zweite Teilkörper wurde mit einem Oxidationskatalysator mit 7 g Pd pro Liter Wabenkörpervolumen belegt. Auch diese Beschichtungen wurden vor Durchführung der Abgastests gealtert.
- 2.-3. Wabenkörper:: Beschichtung mit einem Standard-Dreiwegkatalysator nach Beispiel 2; gealtert

Die Figuren 1 bis 3 zeigen die Emissionskurven für Kohlenwasserstoffe während der ersten 250 s nach dem Start bei Einsatz verschiedener Abgasreinigungssysteme (Figuren 1a - 3a). Die angegebenen Kohlenwasserstoffkonzentrationen beziehen sich auf ein durch Luft auf ein Zehntel verdünntes Abgas gemäß der US FTP-75 Prüfvorschrift.

Figur 1 zeigt, daß die gealterten Dreiwegkatalysatoren (nach Figur la) etwa nach 50 Sekunden beginnen, die Schadstoffe im Abgas zu konvertieren. Zu diesem Zeitpunkt beträgt die Temperatur im Abgas vor den Katalysatoren 300° C. Figur 2 zeigt dieselben Verhältnisse wie Figur 1, jedoch bei einem im Abgasreinigungssystem vor den Dreiwegkatalysatoren geschalteten Adsorber mit einem DAY-Zeolithen (Fig. 2a). Die Desorption der Kohlenwasserstoffe vom Adsorber beginnt schon nach etwa 30 Sekunden bei einer Temperatur von etwa 200° C vor dem Adsorber. Die Dreiwegkatalysatoren sind aber noch nicht in der Lage, den Großteil der desorbierenden Kohlenwasserstoffe zu konvertieren. Figur 3 zeigt demgegenüber eine deutliche Verminderung der Restemission durch Kombination des Adsorbers mit einem mit Palladlum hochbeladenen Oxidationskatalysator in Verbindung mit den zwei Standard-Dreiwegkatalysatoren (Fig. 3a). Der schraffierte Bereich in Figur 3 stellt die Verringerung der Kohlenwasserstoffemission des erfindungsgemäßen Abgasreinigungssystems nach Beispiel 3 gegenüber dem herkömmlichen Abgasreinigungssystem nach Vergleichsbeispiel 3b dar.

In Tabelle 3 sind die Restemissionsmessungen an den Abgasreinigungssystemen nach Vergleichsbeispiel 3 b und nach Beispiel 3 aufgeführt. Wie diese Messungen zeigen, wirkt sich die Verwendung eines hochbeladenen Palladium-Oxidationskatalysators in Kombination mit Kohlenwasserstoff-Adsorber und Standard-Dreiwegkatalysatoren positiv auf die Restemissionen des Abgassystems aus. Während der Kaltstartphase werden nicht nur die Kohlenwasserstoffemissionen um 30 % reduziert, sondern auch die Emission von Kohlenmonoxid. Dieser positive Einfluß bleibt auch über den gesamten Test erhalten.

**Tabelle 3**

| Restemissionsmessung nach US FTP 75 | | | |
|---|---|---|---|
| Abgassystem | Inhalt des ersten Beutels in g/miles (Kaltstartphase) | | |
| | CO | HC | NOₓ |
| nach V-Beispiel 3b*) | 3,00 | 0,51 | 0,83 |
| nach Beispiel 3 | 2,05 | 0,37 | 0,89 |

| Abgassystem | Gesamtemission in g/miles | | |
|---|---|---|---|
| | CO | HC | NOₓ |
| nach V-Beispiel 3b | 1,29 | 0,22 | 0,46 |
| nach Beispiel 3 | 0,48 | 0,10 | 0,38 |

| | | | |
|---|---|---|---|
| *) = Vergleichsbeispiel | | | |

## Patentansprüche

1. Abgasreinigungssystem zur Verminderung der Kohlenwasserstoff-Emissionen während des Kaltstarts von Verbrennungskraftmaschinen enthaltend eine Adsorbermischung aus einem dealuminierten Y-Zeolithen mit einem Si/Al-Verhältnis von über 40 und einem Zeolithen ZSM5 mit einem Si/Al-Verhältnis von über 20, wobei die Adsorbermischung ein Massenverhältnis der beiden Zeolithe von 1 : 10 bis 10 : 1 aufweist, sowie einen unmittelbar nachgeschalteten Oxidationskatalysator mit Platin und/oder Palladium und einen Dreiwegkatalysator mit Platin und/oder Palladium und/oder Rhodium, wobei der Oxidationskatalysator wenigstens 3,5 g Platin und/oder Palladium pro Liter Katalysatorvolumen enthält.

2. Abgasreinigungssystem zur Verminderung der Kohlenwasserstoff-Emissionen während des Kaltstarts von Verbrennungskraftmaschinen enthaltend eine Adsorbermischung aus einem dealuminierten Y-Zeolithen mit einem Si/Al-Verhältnis von über 40 und einem Zeolithen ZSM5 mit einem Si/Al-Verhältnis von über 20, wobei die Adsorbermischung ein Massenverhältnis der beiden Zeolithe von 1 : 10 bis 10 : 1 aufweist, sowie einen nachgeschalteten Dreiwegkatalysator, welcher Platin und/oder Palladium und Rhodium enthält mit einer Beladung von wenigstens 3,5 g Platin und/oder Palladium pro Liter Katalysatorvolumen.

3. Abgasreinigungssystem zur Verminderung der Kohlenwasserstoff-Emissionen während des Kaltstarts von Verbrennungskraftmaschinen enthaltend auf einem monolithischen Wabenkörper eine erste Beschichtung aus einem Oxidationskatalysator, welcher mehr als 3,5 g Platin und/oder Palladium pro Liter Katalysatorvolumen enthält und eine darauf aufgebrachte zweite Beschichtung aus einer Adsorbermischung aus einem dealuminierten Y-Zeolithen mit einem Si/Al-Verhältnis von über 40 und einem Zeolithen ZSM5 mit einem Si/Al-Verhältnis von über 20, wobei die Adsorbermischung ein Massenverhältnis der beiden Zeolithe von 1 : 10 bis 10 : 1 aufweist.

## Claims

1. Exhaust gas purification system for reducing hydrocarbon emissions during the cold start of combustion engines containing an adsorber mixture composed of a dealuminised Y-zeolite with an Si/Al ratio of more than 40 and a zeolite ZSM5 with an Si/Al ratio of more than 20, wherein the adsorber mixture has a mass ratio of the two zeolites of 1:10 to 10:1, and containing an immediately downstream oxidation catalyst with platinum and/or palladium and a three-way catalyst with platinum and/or palladium and/or rhodium, the oxidation catalyst containing at least 3.5 g of platinum and/or palladium per litre of catalyst volume.

2. Exhaust gas purification system for reducing the hydrocarbon emissions during the cold start of combustion engines containing an adsorber mixture composed of a dealuminised Y zeolite with an Si/Al ratio of more than 40 and a zeolite ZSM5 with an Si/Al ratio of more than 20, wherein the adsorber mixture has a mass ratio of the two zeolites of 1:10 to 10:1, and containing a downstream three-way catalyst which contains platinum and/or palladium and rhodium with a loading of at least 3.5 g of platinum and/or palladium per litre of catalyst volume.

3. Exhaust gas purification system for reducing hydrocarbon emissions during the cold start of combustion engines containing on a monolithic honeycomb body a first coating composed of an oxidation catalyst, which contains more than 3.5 g of platinum and/or palladium per litre of catalyst volume, and a second coating applied thereto composed of an adsorber mixture of a dealuminised Y zeolite with an Si/Al ratio of more than 40 and a zeolite ZSM5 with an Si/Al ratio of more than 20, the adsorber mixture having a mass ratio of the two zeolites of 1:10 to 10:1.

## Revendications

1. Dispositif de purification de gaz d'échappement pour réduire les émissions d'hydrocarbures pendant la mise en marche à froid de moteurs à combustion interne contenant un mélange d'adsorbants composé d'une zéolithe Y désaluminée ayant un rapport Si/Al de plus de 40 et d'une zéolithe ZSM5 ayant un rapport Si/Al de plus de 20, le mélange adsorbant comportant un rapport massique des deux zéolithes de 1:10 à 10:1, ainsi qu'un catalyseur d'oxydation branché directement après avec du platine et ou du palladium et un catalyseur à 3 voies avec du platine et/ou du palladium et/ou du rhodium, tandis que le catalyseur d'oxydation contient au moins 3,5 g de platine et/ou de palladium par litre de volume de catalyseur.

2. Dispositif de purification de gaz d'échappement pour réduire les émissions d'hydrocarbures pendant le démarrage à froid de moteurs à combustion interne contenant un mélange d'adsorbant composé d'une zéolithe Y désaluminée ayant un rapport Si/Al de plus de 40 et une zéolithe ZSM5 ayant un rapport Si/Al de plus de 20, tandis que le mélange d'adsorbants comporte un rapport massique des deux zéolithes de 1:10 à 10:1, ainsi qu'un catalyseur à trois voies branché à la suite, qui contient du platine et/ou du palladium et du rhodium avec une charge d'au moins 3,5 g de platine et/ou de palladium par litre de volume de catalyseur.

3. Dispositif de purification de gaz d'échappement pour réduire les émissions d'hydrocarbures pendant le démarrage à froid de moteurs à combustion interne contenant sur un corps en nid d'abeilles monolithique une première enduction composée d'un catalyseur d'oxydation, qui contient plus de 3,5 g de platine et/ou de palladium par litre de volume de catalyseur et une deuxième enduction appliquée dessus composé d'un mélange d'adsorbants en une zéolithe désaluminée ayant un rapport Si/Al de plus de 40 et une zéolithe ZSM5 ayant un rapport Si/Al de plus de 20, tandis que le mélange d'adsorbants comporte un rapport massique des deux zéolithes de 1:10 à 10:1.
